# EUROPEAN PATENT APPLICATION

(11) **EP 4 406 648 A1**
(43) Date of publication of application: **31.07.2024**
(21) Application number: 22872648.5
(22) Date of filing: 29.08.2022
(51) Int. Cl.: B01J 35/04, B01D 53/94, F01N 3/10, F01N 3/28, B01J 29/76

(54) **EXHAUST GAS PURIFICATION CATALYST DEVICE**

(30) Priority: 21.09.2021 JP 2021153276
(71) Applicant: CATALER CORPORATION, Kakegawa-shi, Shizuoka 437-1492 (JP)
(72) Inventor: TERASAKI, Fumitaka, Kakegawa-shi, Shizuoka 437-1492 (JP)
(74) Representative: Wallinger Ricker Schlotter Tostmann
(86) International application number: PCT/JP2022/032449
(87) International publication number: WO 2023/047892

(57) **Abstract**

Provided is an exhaust gas purification catalyst device provided with: a base material having a plurality of exhaust gas flow paths that are partitioned from each other by a partitioning wall; and a noble metal catalyst particle-supporting layer and an inorganic oxide particle layer arranged on the partitioning wall or in the partitioning wall. In the exhaust gas purification catalyst device, the inorganic oxide particle layer is arranged nearer the exhaust gas flow path side than the noble metal catalyst particle-supporting layer and the primary particle diameter of inorganic oxide particles in the inorganic oxide particle layer is 5 nm to 200 nm inclusive.

## Description

### FIELD

The present invention relates to an exhaust gas purification catalytic device.

### BACKGROUND

Selective catalytic reduction (SCR) systems are known as a technology for reducing and purifying NOx in an exhaust gas emitted from a diesel engine before the exhaust gas is released into the atmosphere. The SCR system is a technology that uses a reductant, for example, ammonia, to reduce NOₓ in exhaust gas to N₂.

In an SCR system, a reductant may be excessively used to improve the reductive purification rate of NOₓ. In this case, a non-reacted reductant not used in the reduction of NOₓ is emitted from an SCR catalyst. When ammonia is used as the reductant, the emission of ammonia from an SCR catalyst is referred to as "ammonia slip".

It is desirable that the slipped ammonia be purified (oxidatively purified) with an ASC (ammonia slip catalyst) and then released into the atmosphere. Accordingly, an ASC is often used in combination with an SCR system, for example, in a state of being laminated with an SCR layer or arranged downstream from an SCR layer.

As the ASC, for example, PTL 1 discloses a catalyst wherein an oxidation catalyst metal consisting of platinum or a combination of platinum and palladium is supported on a metal oxide carrier having a high surface area. In addition, PTL 2 discloses a catalyst wherein platinum clathrated with ceria is catalytically supported on a substrate.

### [CITATION LIST]

### [PATENT LITERATURE]

[PTL 1] Japanese Unexamined PCT Publication (Kohyo) No. 2016-532548
[PTL 2] Japanese Unexamined Patent Publication (Kokai) No. 2004-230220

### SUMMARY

### [TECHNICAL PROBLEM]

An object of the present invention is to provide an ASC having excellent purification performance of ammonia, particularly at low temperatures.

### [SOLUTION TO PROBLEM]

The present invention for achieving the above object is as follows.

<<Aspect 1>> An exhaust gas purification catalytic device comprising a noble metal catalyst particle-supporting layer and an inorganic oxide particle layer on or within a partition wall of a substrate having a plurality of exhaust gas channels partitioned by the partition wall, wherein
   the inorganic oxide particle layer is arranged closer to the exhaust gas channels than the noble metal catalyst particle-supporting layer, and
   a primary particle size of inorganic oxide particles in the inorganic oxide particle layer is 5 nm or more and 200 nm or less.
<<Aspect 2>> The exhaust gas purification catalytic device according to Aspect 1, wherein
   noble metal catalyst particles are directly supported within the partition wall of the substrate to form the noble metal catalyst particle-supporting layer, and
   the inorganic oxide particles are directly supported within or on the partition wall of the substrate to form the inorganic oxide particle layer.
<<Aspect 3>> The exhaust gas purification catalytic device according to Aspect 1, wherein
   noble metal catalyst particles are supported on carrier particles,
   the noble metal catalyst particles supported on the carrier particles are arranged on the partition wall of the substrate to form the noble metal catalyst particle-supporting layer, and
   the inorganic oxide particles are arranged on the noble metal catalyst particle-supporting layer to form the inorganic oxide particle layer.
<<Aspect 4>> The exhaust gas purification catalytic device according to any one of Aspects 1 to 3, wherein the inorganic oxide particles are particles of an oxide of one or more metals selected from cerium, titanium, zirconium, aluminum, lanthanum, iron, cobalt, manganese, vanadium, tungsten, copper, and nickel.
<<Aspect 5>> The exhaust gas purification catalytic device according to Aspect 4, wherein the inorganic oxide particles are particles of an oxide of one or more metals selected from cerium, titanium, zirconium, and aluminum.
<<Aspect 6>> The exhaust gas purification catalytic device according to any one of Aspects 1 to 5, wherein an amount of noble metal catalyst particles in the noble metal catalyst particle-supporting layer, as a mass in terms of metal per L capacity of the substrate, is 0.03 g/L or more and 0.50 g/L or less.
<<Aspect 7>> The exhaust gas purification catalytic device according to any one of Aspects 1 to 6, wherein an amount of inorganic oxide particles in the inorganic oxide particle layer, as a mass per L capacity of the substrate, is 3.0 g/L or more and 50 g/L or less.
<<Aspect 8>> The exhaust gas purification catalytic device according to any one of Aspects 1 to 7, further comprising a zeolite layer closer to the exhaust gas channels than the inorganic oxide particle layer.
<<Aspect 9>> The exhaust gas purification catalytic device according to Aspect 8, wherein a zeolite in the zeolite layer is a Cu-CHA type zeolite.
<<Aspect 10>> The exhaust gas purification catalytic device according to Aspect 8 or 9, wherein an amount of zeolite in the zeolite layer, as a mass per L capacity of the substrate, is 30 g/L or more and 200 g/L or less.
<<Aspect 11>> The exhaust gas purification catalytic device according any one of Aspects 1 to 10, wherein noble metal particles in the noble metal catalyst particle-supporting layer are of one or more selected from platinum, palladium, and rhodium.
<<Aspect 12>> The exhaust gas purification catalytic device according to Aspect 11, wherein the noble metal particles in the noble metal catalyst particle-supporting layer are of one or two selected from platinum and palladium.

### [ADVANTAGEOUS EFFECTS OF INVENTION]

According to the present invention, an ASC having excellent purification performance of ammonia, particularly at low temperatures, is provided.

### BRIEF DESCRIPTION OF DRAWINGS

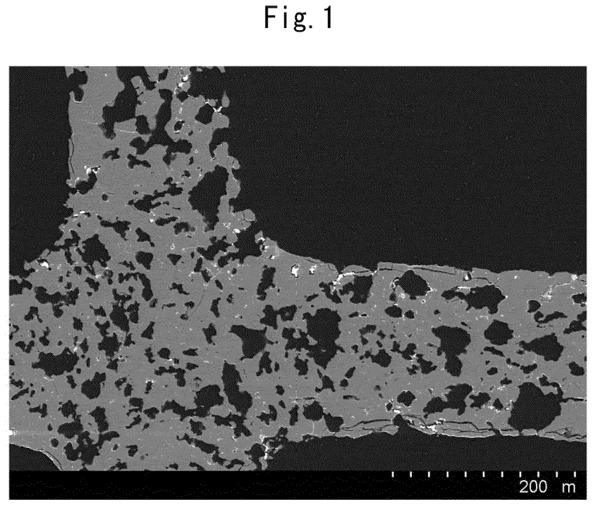

FIG. 1 is a SEM image of the exhaust gas purification catalytic device obtained in Example 1.

### DESCRIPTION OF EMBODIMENTS

### <<Exhaust gas purification catalytic device>>

The exhaust gas purification catalytic device of the present invention is
an exhaust gas purification catalytic device comprising a noble metal catalyst particle-supporting layer and an inorganic oxide particle layer on or within a partition wall of a substrate having a plurality of exhaust gas channels partitioned by the partition wall, wherein
the inorganic oxide particle layer is arranged closer to the exhaust gas channels than the noble metal catalyst particle-supporting layer, and
a primary particle size of inorganic oxide particles in the inorganic oxide particle layer is 5 nm or more and 200 nm or less.

By having the above configuration, the exhaust gas purification catalytic device of the present invention has excellent oxidative purification performance of ammonia, particularly at low temperatures, and is suitable as an ASC.

Oxidation reaction of ammonia has a comparatively large activation energy and is easily affected by reaction temperature. Therefore, the ammonia purification rate at low temperatures remains low in conventional exhaust gas purification catalytic devices.

In the exhaust gas purification catalytic device of the present invention, ammonia (NH₃) is reformed into chemical species having higher reactivity (for example, NH₄⁺ and NH₂⁻) by inorganic oxide particles having a small particle size, and then brought into contact with noble metal catalyst particles, whereby purification rate of ammonia at low temperatures is considered to be increased. However, the present invention is not bound by any specific theory.

The exhaust gas purification catalytic device of the present invention may further comprise a zeolite layer closer to the exhaust gas channels than the inorganic oxide particle layer.

Hereinafter, elements constituting the exhaust gas purification catalytic device of the present invention will be described sequentially in detail.

### <Substrate>

The substrate in the exhaust gas purification catalytic device of the present invention is a substrate having a plurality of exhaust gas channels partitioned by a partition wall. The partition wall of the substrate may have pores allowing fluid communication between adjacent exhaust gas channels.

The substrate may be appropriately selected in accordance with the desired configuration of the exhaust gas purification catalytic device. The constituting material of the substrate, for example, may be a flame-resistant inorganic oxide such as cordierite. The substrate may be of a straight-flow type, or may be of a wall-flow type.

The substrate in the exhaust gas purification catalytic device of the present invention, typically, for example, may be a straight-flow type or wall-flow type monolithic honeycomb substrate made of cordierite.

### <Noble metal catalyst particle-supporting layer>

The exhaust gas purification catalytic device of the present invention comprises a noble metal catalyst particle-supporting layer on or within the partition wall of the substrate. The noble metal particle-supporting layer comprises noble metal catalyst particles. The noble metal catalyst particles function as a catalyst oxidatively purifying ammonia reformed into chemical species having high reactivity by inorganic oxide particles having a small particle size contained in the inorganic oxide particle layer described below.

The noble metal particles in the noble metal catalyst particle-supporting layer may be particles of a noble metal selected from platinum group metals, specifically may be of one or more selected from platinum, palladium, and rhodium, and may be of one or two selected from platinum and palladium.

The particle size (primary particle size) of the noble metal particles, for example, may be 15 nm or more, 20 nm or more, or 30 nm or more, and may be 100 nm or less, 80 nm or less, or 60 nm or less. The particle size of the noble metal particles may be a number average particle size determined from images photographed with a scanning electron microscope or a transmission electron microscope.

The amount of noble metal particles in the noble metal catalyst particle-supporting layer, as a mass in terms of metal per L of substrate capacity, may be 0.01 g/L or more, 0.02 g/L or more, 0.03 g/L or more, 0.04 g/L or more, or 0.05 g/L or more, and may be 2.00 g/L or less, 1.50 g/L or less, 1.00 g/L or less, 0.50 g/L or less, 0.30 g/L or less, or 0.10 g/L or less.

In the exhaust gas purification catalytic device of the present invention, the noble metal catalyst particles
may be directly supported within a partition wall of the substrate to form the noble metal catalyst particle-supporting layer, or
may be supported on carrier particles, and the noble metal catalyst particles supported on the carrier particles may be arranged on a partition wall of the substrate to form the noble metal catalyst particle-supporting layer.

The noble metal catalyst particles being directly supported within a partition wall of the substrate means that the noble metal catalyst particles are supported on a pore wall of the partition wall of the substrate without involving carrier particles. In addition, the noble metal catalyst particles supported on carrier particles being arranged on a partition wall of the substrate means that at least a portion of the carrier particles supporting the noble metal catalyst particles are arranged on the partition wall without being incorporated into the pores of the partition wall of the substrate.

In the exhaust gas purification catalytic device of the present invention, the inorganic oxide particle layer and the noble metal catalyst particle-supporting layer exist as separate layers, whereby it can be ensured that ammonia is brought into contact with the inorganic oxide particle layer and converted into chemical species having high reactivity before coming into contact with the noble metal catalyst particle-supporting layer.

When the noble metal catalyst particles in the noble metal catalyst particle-supporting layer are directly supported within a partition wall of the substrate, the noble metal particles may be localized on the exhaust gas channel side within the partition wall, or may be widely distributed in the thickness direction of the partition wall.

When the noble metal catalyst particles in the noble metal catalyst particle-supporting layer are supported on carrier particles, the carrier particles may be particles of an oxide of one or more metals selected from titanium, zirconium, aluminum, silicon, and rare earth elements other than cerium.

The particle size (secondary particle size) of the carrier particles, for example, may be 1 µm or more, 3 µm or more, 5 µm or more, or 8 µm or more, and may be 100 µm or less, 80 µm or less, 50 µm or less, 30 µm or less, 20 µm or less, or 10 µm or less. The particle size of the carrier particles may be a median diameter (D50) obtained by a dynamic light scattering method on a suspension of carrier particles dispersed in a suitable liquid medium (for example, water).

When the noble metal catalyst particles are supported on carrier particles, the supported amount of noble metal catalyst particles, as a ratio (percentage) of the mass of the noble metal catalyst particles relative to the mass of the carrier particles, for example, may be 0.1% by mass or greater, 0.2% by mass or greater, 0.4% by mass or greater, or 0.6% by mass or greater, and may be 2.0% by mass or less, 1.5% by mass or less, 1.2% by mass or less, 1.0% by mass or less, or 0.8% by mass or less.

When the noble metal catalyst particles are supported on carrier particles, the noble metal catalyst particle-supporting layer may consist only of carrier particles supporting the noble metal catalyst particles, or may include an optional component in addition thereto. The optional component contained in the noble metal catalyst particle-supporting layer, for example, may be inorganic oxide particles other than the carrier particles or a binder.

From the viewpoint of increasing NH₃ purification ability while avoiding an excessive increase in pressure loss in the exhaust gas purification catalytic device of the present invention, the ratio of an optional component in the noble metal catalyst particle-supporting layer may be low. Specifically, the mass ratio of the optional component relative to the total mass of the noble metal catalyst particle-supporting layer may be 50% by mass or less, 30% by mass or less, 10% by mass or less, 5% by mass or less, 3% by mass or less, or 1% by mass or less.

### <Inorganic oxide particle layer>

The exhaust gas purification catalytic device of the present invention comprises an inorganic oxide particle layer closer to the exhaust gas channels than the noble metal catalyst particle-supporting layer.

The position of the inorganic oxide particle layer may vary depending on the state of the noble metal catalyst particle layer, and specifically, may be as follows.

When forming a noble metal catalyst particle-supporting layer by directly supporting noble metal catalyst particles within a partition wall of the substrate, inorganic oxide particles may be directly supported within or on the partition wall of the substrate to form an inorganic oxide particle layer; or
when forming a noble metal catalyst particle-supporting layer by arranging noble metal catalyst particles supported on carrier particles on a partition wall of the substrate, inorganic oxide particles may be arranged on the noble metal catalyst particle-supporting layer to form an inorganic oxide particle layer.

"Inorganic oxide particles are directly supported within a partition wall of the substrate" means that the inorganic oxide particles are supported on a pore wall of the partition wall of the substrate without involving carrier particles. In addition, the inorganic oxide particles being directly supported on a partition wall of the substrate means that at least a portion of the inorganic oxide particles are arranged on the partition wall without being incorporated into the pores of the partition wall of the substrate.

"Inorganic oxide particles are arranged on the noble metal catalyst particle-supporting layer" means that the inorganic oxide particles are arranged on the exhaust gas channel side of the noble metal catalyst particle-supporting layer.

In all of the above cases, the inorganic oxide particle layer is arranged closer to the exhaust gas channels than the noble metal catalyst particle-supporting layer. According to this configuration, NH₃ in the exhaust gas is initially brought into contact with the inorganic oxide particle layer and reformed to chemical species having higher reactivity (for example, NH₄⁺ and NH₂⁻), which are then brought into contact with noble metal catalyst particles in the noble metal catalyst particle-supporting layer. According to such a configuration, the exhaust gas purification catalytic device of the present invention can demonstrate high NH₃ purification performance even in low-temperature regions.

The primary particle size of the inorganic oxide particles in the inorganic oxide particle layer is 5 nm or more and 200 nm or less. In the exhaust gas purification catalytic device of the present invention, reforming efficiency of NH₃ is improved by the inorganic oxide particle layer consisting of such fine particles as inorganic oxide particles.

The inorganic oxide particles in the inorganic oxide particle layer may be particles of an oxide of one or more metals selected from cerium, titanium, zirconium, aluminum, lanthanum, iron, cobalt, manganese, vanadium, tungsten, copper, and nickel, particularly may be particles of an oxide of one or more metals selected from cerium, titanium, zirconium, and aluminum, and typically may be ceria particles.

The primary particle size of the inorganic oxide particles in the inorganic oxide particle layer is 5 nm or more from the viewpoints of easily manufacturing the exhaust gas purification catalytic device and/or suppressing incorporation the inorganic oxide particles into the noble metal catalyst particle-supporting layer, and is 200 nm or less from the viewpoint of achieving an ammonia reforming effect with high efficiency. The primary particle size of the inorganic oxide particles may be 6 nm or more, 8 nm or more, or 10 nm or more, and may be 150 nm or less, 100 nm or less, 80 nm or less, 50 nm or less, 30 nm or less, 20 nm or less, or 15 nm or less.

The primary particle size of the inorganic oxide particles is a number average particle size of area-equivalent diameters of primary particles observed in an electron microscope (SEM) photograph.

The amount of inorganic oxide particles in the inorganic oxide particle layer may be appropriately set in consideration of achieving an ammonia reforming effect with high efficiency and not excessively increasing pressure loss. The amount of inorganic oxide particles in the inorganic oxide particle layer, as a mass per L capacity of the substrate, for example, may be 1.0 g/L or more, 2.0 g/L or more, or 3.0 g/L or more, and may be 50 g/L or less, 30 g/L or less, 10 g/L or less, 8 g/L or less, or 5 g/L or less.

### <Zeolite layer>

The exhaust gas purification catalytic device of the present invention may further comprise a zeolite layer closer to the exhaust gas channels than the inorganic oxide particle layer. The zeolite layer is a layer comprising a zeolite.

The exhaust gas purification catalytic device of the present invention comprising a zeolite layer has excellent NH₃ purification performance particularly at low temperatures and can demonstrate NOx purification ability by SCR, in addition to being suitable as an ASC.

The zeolite in the zeolite layer may have a silica-alumina ratio (SAR) of 15.0 or less. By using a zeolite having an SAR of 15.0 or less, NOx purification rate by SCR reaction is increased. The SAR value is expressed as a ratio (SiO₂/Al₂O₃) of a molar amount of silica (SiO₂) to a molar amount of alumina (Al₂O₃) in the zeolite.

The SAR of the zeolite may be 14.0 or less, 13.0 or less, 12.0 or less, 11.0 or less, 10.0 or less, 9.0 or less, or 8.0 or less from the viewpoint of increasing NOx purification rate. However, when the SAR is too low, the synthesis of zeolite becomes difficult, and may lead to an excessive increase in catalyst cost. In order to avoid such circumstances, the SAR of the zeolite may be 4.0 or greater, 5.0 or greater, 6.0 or greater, or 7.0 or greater.

The crystal structure of the zeolite in the zeolite layer is arbitrary. The crystal structures of proton zeolites applicable to the present invention are shown with the respective structural codes (description within parentheses), and for example, may be A type (LTA), ferrierite (FER), MCM-22 (MWW), ZSM-5 (MFI), mordenite (MOR), L type (LTL), X type or Y type (FAU), beta type (BEA), and chabazite (CHA).

The zeolite may be a zeolite subjected to ion exchange with Cu. The Cu amount in the zeolite, relative to 1 mole of Al atoms in the zeolite, may be 0.10 mol/mol-Al or more, 0.15 mol/mol-Al or more, 0.20 mol/mol-Al or more, 0.25 mol/mol-Al or more, or 0.30 mol/mol-Al or more from the viewpoint of increasing SCR activity of the exhaust gas purification catalytic device of the present invention.

There is no limit for the upper limit of Cu amount in the zeolite from the viewpoint of SCR activity. However, there is a manufacturing limit to the Cu amount in the zeolite. From the viewpoint of properly maintaining the manufacturing cost of the exhaust gas purification catalytic device, the Cu amount in the zeolite, relative to 1 mole of Al atoms in the zeolite, may be 0.50 mol/mol-Al or less, 0.45 mol/mol-Al or less, 0.40 mol/mol-Al or less, 0.35 mol/mol-Al or less, 0.30 mol/mol-Al or less, or 0.25 mol/mol-Al or less.

The zeolite in the zeolite layer of the exhaust gas purification catalytic device of the present invention typically may be a Cu-CHA type zeolite, obtained by subjecting a chabazite type zeolite, indicated with the structural code "CHA", to ion exchange with Cu to dope the zeolite with Cu.

The zeolite in the zeolite layer may be particulate. The particle size (secondary particle size) of the particulate zeolite, for example, may be 0.5 µm or more, 1 µm or more, 3 µm or more, or 5 µm or more, and may be 40 µm or less, 20 µm or less, or 10 µm or less. The particle size of the carrier particles may be a median diameter (D50) obtained by a dynamic light scattering method on a suspension of carrier particles dispersed in a suitable liquid medium (for example, water).

The zeolite layer in the exhaust gas purification catalytic device of the present invention may contain an optional component other than a zeolite. The optional component in the zeolite layer, for example, may be an inorganic oxide other than a zeolite or a binder.

The amount of zeolite in the zeolite layer, as a mass per L capacity of the substrate, may be 30 g/L or more, 40 g/L or more, 50 g/L or more, or 60 g/L or more from the viewpoint of increasing SCR activity of the exhaust gas purification catalytic device of the present invention. In order to avoid excessively increasing pressure loss in the exhaust gas purification catalytic device, the amount of zeolite per L capacity of the substrate may be 200 g/L or less, 150 g/L or less, 100 g/L or less, or 80 g/L or less.

### «Manufacturing method of exhaust gas purification catalytic device»

The manufacturing method of the exhaust gas purification catalytic device of the present invention may be any method as long as the catalytic device has the configuration as described above. However, the exhaust gas purification catalytic device of the present invention may be manufactured by a manufacturing method for an exhaust gas purification catalytic device comprising, for example,
forming a noble metal catalyst particle-supporting layer on a substrate, and
forming an inorganic oxide particle layer on the substrate on which the noble metal catalyst particle-supporting layer is formed.

When the exhaust gas purification catalytic device of the present invention comprises a zeolite layer, the manufacturing method of the exhaust gas purification catalytic device may further comprise forming a zeolite layer on the substrate on which the noble metal catalyst particle-supporting layer and the inorganic oxide particle layer are formed.

### <Substrate>

The substrate may be appropriately selected in accordance with the desired substrate in the exhaust gas purification catalytic device, and for example, may be a straight-flow type or wall-flow type monolithic honeycomb substrate made of cordierite.

### <Formation of noble metal catalyst particle-supporting layer>

As described above, in the noble metal catalyst particle-supporting layer of the exhaust gas purification catalytic device of the present invention, the noble metal catalyst particles may be directly supported on or within a partition wall of the substrate, or may be supported on suitable carrier particles. Hereinafter, formation of the noble metal catalyst particle-supporting layer when the noble metal catalyst particles are directly supported on or within a partition wall of the substrate and when the noble metal catalyst particles are supported on carrier particles will be described in order.

### (Formation of noble metal catalyst particle-supporting layer wherein noble metal catalyst particles are directly supported on or within partition wall of substrate)

In this case, for example, a wash coat liquid 1 comprising a noble metal precursor and a suitable solvent may be applied on a substrate and baked to form the noble metal catalyst particle-supporting layer. The wash coat liquid 1 can comprise a thickener and may be adjusted to a suitable viscosity.

The noble metal precursor may be a halide, a strong acid salt, or a complex compound of a noble metal constituting the desired noble metal catalyst particles. When the noble metal catalyst particles, for example, are platinum particles, the noble metal precursor, for example, may be tetraammineplatinum hydroxide, tetraammineplatinum chloride, ammonium tetrachloroplatinate, ammonium hexachloroplatinate, or dinitrodiammineplatinum (nitric acid solution).

The thickener, for example, may be a polysaccharide or a solvent-soluble polymer, and specifically, for example, may be hydroxyethylcellulose, carboxymethylcellulose, quince seed gum, xanthan gum, polyacrylic acid, or polyether.

The solvent of the wash coat 1 may be one or more selected from water and water-soluble organic solvent, and is typically water.

Application of the wash coat liquid 1 on the substrate and baking thereof may be carried out by known methods or by methods to which appropriate modifications are made by a person skilled in the art.

The noble metal catalyst particle-supporting layer can be formed at any depth within a partition wall of the substrate by appropriately adjusting the viscosity of the wash coat liquid 1, the application conditions, and the time from the completion of application until baking.

### (Formation of noble metal catalyst particle-supporting layer wherein noble metal catalyst particles are supported on carrier particles)

In this case, for example, a wash coat liquid 1' comprising carrier particles on which noble metal catalyst particles are supported and a suitable solvent may be applied on a substrate and baked to form a noble metal catalyst particle-supporting layer. The wash coat liquid 1' may comprise an optional component of the noble metal catalyst particle-supporting layer, can comprise a thickener, and may be adjusted to a suitable viscosity.

The carrier particles may be appropriately selected in accordance with the desired carrier particles in the noble metal catalyst particle-supporting layer, and for example, may be particles of one or more oxides selected from titanium, zirconium, aluminum, silicon, and rare earth elements other than cerium.

Supporting the noble metal catalyst particles on the carrier particles may be carried out by bringing the carrier particles into contact with a noble metal precursor, followed by baking. The contact may be carried out under the presence of a suitable solvent, for example, one or more selected from water and water-soluble organic solvents, typically water, or may be carried out without a solvent. Baking may be carried out by a known method or by a method to which appropriate modifications are made by a person skilled in the art.

An optional component contained in the wash coat liquid 1' may be appropriately selected in accordance with the desired configuration of the noble metal catalyst particle-supporting layer. The wash coat liquid 1', for example, may comprise inorganic oxide particles other than the carrier particles or a binder.

The thickener and solvent contained in the wash coat liquid 1' may be the same as those of the wash coat liquid 1 used in the formation of the noble metal catalyst particle-supporting layer wherein noble metal catalyst particles are directly supported on the substrate.

Application of the wash coat liquid 1' on the substrate and baking thereof may be carried out by known methods or by methods to which appropriate modifications are made by a person skilled in the art.

### <Formation of inorganic oxide particle layer>

A wash coat liquid 2 comprising inorganic oxide particles having a predetermined particle size and a suitable solvent may be applied on a substrate on which the noble metal catalyst particle-supporting layer is formed and then baked to carry out the formation of the inorganic oxide particle layer on the substrate on which the noble metal catalyst particle-supporting layer is formed. The wash coat 2 can comprise a thickener and may be adjusted to a suitable viscosity.

The inorganic oxide particles may be appropriately selected in accordance with the desired inorganic oxide particles in the inorganic oxide particle layer, and for example, ceria particles having a primary particle size of 5 nm or more and 200 nm or less may be used.

The thickener and solvent contained in the wash coat liquid 2 may be the same as those of the wash coat liquid 1.

Application of the wash coat liquid 2 on the substrate on which the noble metal catalyst particle-supporting layer is formed and baking thereof may be carried out by known methods or by methods to which appropriate modifications are made by a person skilled in the art.

The noble metal catalyst particle-supporting layer can be formed at any depth within a partition wall or on the partition wall of the substrate by appropriately adjusting the viscosity of the wash coat liquid 2, the application conditions, and the time from the completion of application until baking.

According to the above method, an exhaust gas purification catalytic device comprising a noble metal catalyst particle-supporting layer and an inorganic oxide particle layer on or within a partition wall of a substrate, wherein the inorganic oxide particle layer is arranged closer to the exhaust gas channels than the noble metal catalyst particle-supporting layer, is obtained.

### <Formation of zeolite layer>

In the manufacturing method of the exhaust gas purification device of the present invention, a zeolite layer may optionally be formed closer to the exhaust gas channels than the inorganic oxide particle layer. A wash coat 3 comprising a zeolite and a suitable solvent may be applied on a substrate comprising the noble metal catalyst particle-supporting layer and the inorganic oxide particle layer and then baked to carry out the formation of the zeolite layer. The wash coat 3 can comprise a thickener and may be adjusted to a suitable viscosity. In addition, the wash coat 3, for example, may further comprise an optional component such as an inorganic oxide other than a zeolite or a binder. The type and amount of the optional component may be appropriately selected in accordance with the desired configuration of the zeolite layer.

The zeolite and the optional component may be appropriately selected in accordance with the desired configuration of the zeolite layer. For example, a Cu-CHA type zeolite may be used as the zeolite, and for example, one or more selected from an inorganic oxide other than a zeolite and a binder may be used as the optional component.

The thickener and solvent contained in the wash coat liquid 3 may be the same as those in the wash coat liquid 1.

Application of the wash coat liquid 3 on the substrate comprising a noble metal catalyst particle-supporting layer and an inorganic oxide particle layer and baking thereof may be carried out by known methods or by methods to which appropriate modifications are made by a person skilled in the art.

According to the above method, an exhaust gas purification catalytic device comprising, on a substrate, a noble metal catalyst particle-supporting layer, an inorganic oxide particle layer, and a zeolite layer in this order is obtained.

### EXAMPLES

### <<Example 1>>

### <Manufacture of exhaust gas purification catalytic device>

### (1) Preparation of wash coat liquid 1

A tetraammineplatinum(II) hydroxide aqueous solution as a noble metal precursor and pure water were mixed, and a polysaccharide as a thickener was further added to obtain a wash coat liquid 1 containing a noble metal precursor. The Pt concentration in the wash coat liquid 1 was 0.03% by mass as a value in terms of the metal Pt.

### (2) Preparation of wash coat liquid 2

Ceria particles having a primary particle size of 10 nm and pure water were mixed, and a polysaccharide as a thickener was further added to obtain a wash coat liquid 2 containing ceria particles. The ceria particle content in the wash coat liquid 2 was 3.5% by mass.

### (3) Preparation of wash coat liquid 3

A Cu-CHA type zeolite having a silica-alumina ratio (SAR) of 13.5 and an amount of Cu per Al atom of 0.28 mol/mol-Al, a silica-based binder, and pure water were mixed, and a polysaccharide as a thickener was further added to obtain a wash coat liquid 3 containing a Cu-CHA type zeolite.

### (4) Formation of each coating layer (manufacture of exhaust gas purification catalytic device)

The obtained wash coat liquid 1 described above was applied on a straight-flow type honeycomb substrate made of cordierite and having a capacity of 17 mL so that the Pt amount in terms of the metal Pt was 0.05 g/L, followed by baking at 500°C for 15 min in air to obtain a catalytic device precursor 1 comprising a noble metal catalyst particle-supporting layer wherein Pt particles were directly supported within a partition wall of the substrate.

The obtained wash coat liquid 2 described above was then applied on the catalytic device precursor 1 so that the amount of ceria particles was 3.0 g/L, followed by baking at 500°C for 15 min in air to obtain a catalytic device precursor 2 comprising an inorganic oxide particle layer wherein CeO₂ was directly supported closer to the exhaust gas channels than the noble metal catalyst particle-supporting layer within the partition wall of the substrate.

The obtained wash coat liquid 3 described above was further applied on the catalytic device precursor 2 so that the Cu-CHA type zeolite amount was 100 g/L, followed by baking at 500°C for 15 min in air, whereby an exhaust gas purification catalytic device comprising a metal catalyst particle-supporting layer and an inorganic oxide particle layer within the partition wall of the substrate and further comprising a zeolite layer comprising a Cu-CHA type zeolite closer to the exhaust gas channels than the inorganic oxide layer was obtained.

### (5) Evaluation of exhaust gas purification catalytic device

The obtained exhaust gas purification catalytic device was subjected to a hydrothermal durability treatment by heating at 630°C for 50 h while circulating air having a water concentration of 10% by volume.

A model gas comprising NH₃ of a known concentration was introduced and circulated in the exhaust gas purification catalytic device after the hydrothermal durability treatment to measure the concentration of NH₃ in the exhaust gas. An NH₃ purification rate calculated by the following formula was determined. NH3 purification rate (%) = {(NH3 concentration in introduced gas - NH3 concentration in exhaust gas)/NH3 concentration in introduced gas} × 100

The introduction conditions of the model gas were set as follows.
Composition of model gas: NH₃: 500 ppm, O₂: 10%, H₂O: 5%, and N₂: balance
Space velocity during model gas introduction: 60,000 hr⁻¹

NH₃ purification rates at input gas temperatures of 250°C, 300°C, and 400°C as evaluation results are shown in Table 2.

The exhaust gas purification catalytic device after the hydrothermal durability treatment obtained in Example 1 was subjected to scanning electron microscope (SEM) observation. A "S-4800" manufactured by Hitachi High-Tech Corporation was used in the SEM observation, and a diametrical cross section of the exhaust gas purification catalytic device was observed under the conditions of a magnification of 200× and an acceleration voltage of 20.0 kV. The exhaust gas purification catalytic device after the hydrothermal durability treatment was cut out from around 1/2 on the length direction and near the center of a diametrical cross section so that the diametrical cross section was a 6-mm square and then embedded in resin to prepare an observation sample. The obtained SEM image is shown in FIG. 1. In FIG. 1, the inorganic oxide (CeO₂) fine particles are displayed in white.

### «Examples 2 to 5 and Comparative Examples 1, 2, and 5>>

Except that each of the compositions of the wash coat liquid 1 and the wash coat liquid 2 was as described in Table 1, exhaust gas purification catalytic devices were manufactured and evaluated in the same manner as in Example 1.

Evaluation results are shown in Table 2.

### <<Example 6>>

Except that in place of the wash coat liquid 1, a wash coat liquid prepared as follows was used as the wash coat liquid 1, an exhaust gas purification catalytic device was manufactured and evaluated in the same manner as in Example 1.

A tetraammineplatinum(II) hydroxide aqueous solution in a 0.1-g Pt metal equivalent amount as a noble metal precursor and pure water were mixed, 15.0 g of Al₂O₃ having a primary particle size of 7,000 nm was further added, and the mixture was stirred for 1 h. Subsequently, the mixture was heated at 120°C for 5 h, and after the water was evaporated, baked at 500°C for 1 h in air to obtain Pt-supporting Al₂O₃ (Pt/Al₂O₃).

The obtained Pt/Al₂O₃ and pure water were mixed, and a polysaccharide as a thickener was further added to obtain a wash coat liquid 1 containing Pt/Al₂O₃. The Pt concentration in the wash coat liquid 1 was 0.03% by mass as a value in terms of the metal Pt.

Evaluation results are shown in Table 2.

### <<Comparative Example 3>>

Except that a wash coat liquid prepared as follows was used as the wash coat liquid 1 and the wash coat liquid 2 was not used, an exhaust gas purification catalytic device was manufactured and evaluated in the same manner as in Example 1.

A tetraammineplatinum(II) hydroxide aqueous solution in a 0.1-g Pt metal equivalent amount as a noble metal precursor and pure water were mixed, 15.0 g of CeO₂ having a primary particle size of 7,000 nm was further added, and the mixture was stirred for 1 h. Subsequently, the mixture was heated at 120 °C for 5 h, and after the water was evaporated, baked at 500°C for 1 h in air to obtain Pt-supporting CeO₂ (Pt/CeO₂).

The obtained Pt/CeO₂ and pure water were mixed, and a polysaccharide as a thickener was further added to obtain a wash coat liquid 1 containing Pt/CeO₂. The Pt concentration in the wash coat liquid 1 was 0.03% by mass as a value in terms of the metal Pt.

Evaluation results are shown in Table 2.

### <<Comparative Example 4>>

An aqueous solution containing 10% by mass of cerium nitrate and not containing a thickener was used as the wash coat liquid 2.

An operation of applying and then baking the above wash coat liquid 2 at 500°C for 15 min in air was repeated on the catalytic device precursor 1 obtained in the same manner as in Example 1 until CeO₂ amount on the substrate reached 3.0 g/L to obtain a catalytic device precursor 2.

An exhaust gas purification catalytic device was manufactured by using the catalytic device precursor 2 and applying and baking the wash coat liquid 3 in the same manner as in Example 1, and was evaluated.

In the obtained exhaust gas purification catalytic device, presumably, the inorganic oxide (CeO₂) did not exist as an independent layer on the catalytic metal (Pt) particle-supporting layer, but existed in the vicinity of each catalytic metal particle and covered each catalytic metal particle.

Evaluation results are shown in Table 2.

### [Table 1]

**Table 1.**

| | Wash coat liquid 1 | | | | Wash coat liquid 2 | | | | | Wash coat liquid 3 | |
|---|---|---|---|---|---|---|---|---|---|---|---|
| | Noble metal precursor | | Thickener | Pt application amount (g/L) | Inorganic oxide particle | | | Thickener | Inorganic oxide particle application amount (g/L) | Zeolite | |
| | Type | Concentration in terms of metal (wt%) | Type | | Type | Primary particle size (nm) | Concentration (wt%) | Type | | Type | Application amount (g/L) |
| Example 1 | Pt ammine | 0.030 | polysaccharide | 0.05 | CeO₂ | 10 | 3.5 | polysaccharide | 3.0 | Cu-CHA | 100 |
| Example 2 | Pt ammine | 0.030 | polysaccharide | 0.05 | TiO₂ | 10 | 3.5 | polysaccharide | 3.0 | Cu-CHA | 100 |
| Example 3 | Pt ammine | 0.030 | polysaccharide | 0.05 | ZrO₂ | 10 | 3.5 | polysaccharide | 3.0 | Cu-CHA | 100 |
| Example 4 | Pt ammine | 0.030 | polysaccharide | 0.05 | Al₂O₃ | 10 | 3.5 | polysaccharide | 3.0 | Cu-CHA | 100 |
| Example 5 | Pt ammine | 0.030 | polysaccharide | 0.05 | CeO₂ | 10 | 3.5 | polysaccharide | 3.0 | Cu-CHA | 100 |
| | Pd ammine | 0.003 | | | | | | | | | |
| Example 6 | Pt/Al₂O₃ | 0.03 (value in terms of Pt) | polysaccharide | 0.05 | CeO₂ | 10 | 3.5 | polysaccharide | 3.0 | Cu-CHA | 100 |
| Comparative Example 1 | Pt ammine | 0.030 | polysaccharide | 0.05 | CeO₂ | 7000 | 3.5 | polysaccharide | 3.0 | Cu-CHA | 100 |
| Comparative Example 2 | Pt ammine | 0.030 | polysaccharide | 0.05 | CeO₂ | 1000 | 3.5 | polysaccharide | 3.0 | Cu-CHA | 100 |
| Comparative Example 3 | Pt/CeO₂ | 0.03 (value in terms of Pt) | polysaccharide | 0.05 | - | - | - | - | - | Cu-CHA | 100 |
| Comparative Example 4 | Pt ammine | 0.030 | polysaccharide | 0.05 | cerium nitrate | - | 10 | - | 3.0 | Cu-CHA | 100 |
| Comparative Example 5 | Pt/Al₂O₃ | 0.03 (value in terms of Pt) | polysaccharide | 0.05 | CeO₂ | 7000 | 3.5 | polysaccharide | 3.0 | Cu-CHA | 100 |

### [Table 2]

**Table 2.**

| | Catalytic noble metal particle-supporting layer | | Inorganic oxide particle layer | | | Zeolite layer | | NH₃ purification rate (%) | | |
|---|---|---|---|---|---|---|---|---|---|---|
| | Precursor type | Pt application amount (g/L) | Type | Primary particle size (nm) | Application amount (g/L) | Type | Application amount (g/L) | 250 °C | 300 °C | 400 °C |
| Example 1 | Pt ammine | 0.05 | CeO2 | 10 | 3.0 | Cu-CHA | 100 | 97 | 99 | 100 |
| Example 2 | Pt ammine | 0.05 | TiO₂ | 10 | 3.0 | Cu-CHA | 100 | 92 | 97 | 100 |
| Example 3 | Pt ammine | 0.05 | ZrO₂ | 10 | 3.0 | Cu-CHA | 100 | 91 | 99 | 100 |
| Example 4 | Pt ammine | 0.05 | Al₂O₃ | 10 | 3.0 | Cu-CHA | 100 | 97 | 99 | 100 |
| Example 5 | Pt ammine | 0.05 | CeO2 | 10 | 3.0 | Cu-CHA | 100 | 97 | 99 | 100 |
| | Pd ammine | | | | | | | | | |
| Example 6 | Pt/Al₂O₃ | 0.05 | CeO₂ | 10 | 3.0 | Cu-CHA | 100 | 97 | 99 | 100 |
| Comparative Example 1 | Pt ammine | 0.05 | CeO₂ | 7000 | 3.0 | Cu-CHA | 100 | 83 | 97 | 100 |
| Comparative Example 2 | Pt ammine | 0.05 | CeO₂ | 1000 | 3.0 | Cu-CHA | 100 | 88 | 97 | 100 |
| Comparative Example 3 | Pt/CeO₂ | 0.05 | - | - | - | Cu-CHA | 100 | 88 | 95 | 100 |
| Comparative Example 4 | Pt ammine | 0.05 | cerium nitrate | - | 3.0 | Cu-CHA | 100 | 85 | 94 | 100 |
| Comparative Example 5 | Pt/Al₂O₃ | 0.05 | CeO₂ | 7000 | 3.0 | Cu-CHA | 100 | 89 | 95 | 100 |

Abbreviations of components in the tables have the following meanings.

### <Noble metal precursor>

Pt ammine: tetraammineplatinum(II) hydroxide aqueous solution
Pd ammine: dichlorotetraamminepalladium(II) aqueous solution

### <Zeolite>

Cu-CHA: Cu-CHA type zeolite having a silica-alumina ratio (SAR) of 13.5 and an amount of Cu per Al atom of 0.28 mol/mol-Al

As is clear from Tables 1 and 2, in the exhaust gas purification catalytic devices of Examples 1 to 6 comprising a Pt particle-supporting layer, an inorganic oxide fine particle layer, and a Cu-CHA type zeolite layer in this order on or within a partition wall of the substrate, NH₃ purification rates at high temperatures (300°C and 400°C) and NH₃ purification rate at low temperatures (200°C) showed satisfactory values, and low-temperature NH₃ purification performance was sufficiently high.

In contrast, in the exhaust gas purification catalytic devices of Comparative Examples 1, 2, and 5, wherein the primary particle size of CeO₂ constituting the inorganic oxide particle layer was large; Comparative Example 3, which did not comprise an inorganic oxide particle layer; and Comparative Example 4, wherein the inorganic oxide is not considered to exist as an independent layer on the noble metal catalyst (Pt) particle-supporting layer, although NH₃ purification rates were satisfactory at high temperatures (300°C and 400°C), NH₃ purification rate at low temperatures (200°C) showed low values, and low-temperature NH₃ purification performance was insufficient.

## Claims

1. An exhaust gas purification catalytic device, comprising a noble metal catalyst particle-supporting layer and an inorganic oxide particle layer on or within a partition wall of a substrate having a plurality of exhaust gas channels partitioned by the partition wall, wherein
the inorganic oxide particle layer is arranged closer to the exhaust gas channels than the noble metal catalyst particle-supporting layer, and
a primary particle size of inorganic oxide particles in the inorganic oxide particle layer is 5 nm or more and 200 nm or less.

2. The exhaust gas purification catalytic device according to claim 1, wherein
noble metal catalyst particles are directly supported within the partition wall of the substrate to form the noble metal catalyst particle-supporting layer, and
the inorganic oxide particles are directly supported within or on the partition wall of the substrate to form the inorganic oxide particle layer.

3. The exhaust gas purification catalytic device according to claim 1, wherein
noble metal catalyst particles are supported on carrier particles,
the noble metal catalyst particles supported on the carrier particles are arranged on the partition wall of the substrate to form the noble metal catalyst particle-supporting layer, and
the inorganic oxide particles are arranged on the noble metal catalyst particle-supporting layer to form the inorganic oxide particle layer.

4. The exhaust gas purification catalytic device according to any one of claims 1 to 3, wherein the inorganic oxide particles are particles of an oxide of one or more metals selected from cerium, titanium, zirconium, aluminum, lanthanum, iron, cobalt, manganese, vanadium, tungsten, copper, and nickel.

5. The exhaust gas purification catalytic device according to claim 4, wherein the inorganic oxide particles are particles of an oxide of one or more metals selected from cerium, titanium, zirconium, and aluminum.

6. The exhaust gas purification catalytic device according to any one of claims 1 to 5, wherein an amount of noble metal catalyst particles in the noble metal catalyst particle-supporting layer, as a mass in terms of metal per L capacity of the substrate, is 0.03 g/L or more and 0.50 g/L or less.

7. The exhaust gas purification catalytic device according to any one of claims 1 to 6, wherein an amount of inorganic oxide particles in the inorganic oxide particle layer, as a mass per L capacity of the substrate, is 3.0 g/L or more and 50 g/L or less.

8. The exhaust gas purification catalytic device according to any one of claims 1 to 7, further comprising a zeolite layer closer to the exhaust gas channels than the inorganic oxide particle layer.

9. The exhaust gas purification catalytic device according to claim 8, wherein a zeolite in the zeolite layer is a Cu-CHA type zeolite.

10. The exhaust gas purification catalytic device according to claim 8 or 9, wherein an amount of zeolite in the zeolite layer, as a mass per L capacity of the substrate, is 30 g/L or more and 200 g/L or less.

11. The exhaust gas purification catalytic device according to any one of claims 1 to 10, wherein noble metal particles in the noble metal catalyst particle-supporting layer are of one or more selected from platinum, palladium, and rhodium.

12. The exhaust gas purification catalytic device according to claim 11, wherein the noble metal particles in the noble metal catalyst particle-supporting layer are of one or two selected from platinum and rhodium.
